# EUROPÄISCHE PATENTSCHRIFT

(11) **EP 2 956 420 B1**
(45) Veröffentlichungstag und Bekanntmachung des Hinweises auf die Patenterteilung: **18.07.2018**
(21) Anmeldenummer: 14705147.8
(22) Anmeldetag: 18.02.2014
(51) Int. Cl.: C03C 13/06

(54) **TEMPERATURBESTÄNDIGE ALUMOSILIKAT-GLASFASER SOWIE VERFAHREN ZUR HERSTELLUNG UND VERWENDUNG DERSELBEN**
TEMPERATURE-RESISTANT ALUMINOSILICATE GLASS FIBERS AND METHOD FOR THE PRODUCTION THEREOF AND USE THEREOF
FIBRE DE VERRE D'ALUMINOSILICATE THERMORÉSISTANTE ET PROCÉDÉ DE PRODUCTION ET D'UTILISATION DE CELLE-CI

(30) Priorität: 18.02.2013 DE 102013202565; 17.02.2014 DE 102014202850
(43) Veröffentlichungstag der Anmeldung: 23.12.2015
(73) Patentinhaber: AS Valmieras Stikla Skiedra, 4201 Valmiera (LV)
(72) Erfinder: PREISS-DAIMLER, Heinz-Jürgen, 01723 Wilsdruff (DE)
(74) Vertreter: Kailuweit & Uhlemann Patentanwälte Partnerschaft mbB
(86) Internationale Anmeldenummer: PCT/EP2014/053031
(87) Internationale Veröffentlichungsnummer: WO 2014/125108

(56) Entgegenhaltungen:
- EP-A1- 2 321 231
- WO-A1-00/73232
- US-A1- 2005 130 825

## Beschreibung

Die Erfindung betrifft temperaturbeständige Alumosilikat-Glasfasern sowie Verfahren zur Herstellung und Verwendung derselben.

Es gibt eine Vielzahl anorganischer Fasern im Hochtemperatursegment. Beispiele sind unter anderem Silikafasern, Glasfasern, keramische Fasern, biolösliche Fasern, polykristalline Fasern und Quarzfasern. Dabei finden temperaturbeständige Fasern dort Anwendung, wo hohe Temperaturen kontrolliert werden müssen. Weiterhin stellt der Brandschutz in Gebäuden ein Anwendungsgebiet dar. Neben dem Einsatz in großindustriellen Verhüttungsanlagen von metallischen Erzen, der Stahl- und Aluminiumerzeugung und dem Industrieofenbau, findet man temperaturbeständige Glasfasern, zunehmend aber auch in Bereichen wie der Haushaltsgerätetechnik, der Automobilindustrie, sowie der Luft- und Raumfahrt.

In modernen High-Tech-Anwendungen erfüllen Fasern neben der Funktion der Wärmedämmung und/oder -isolierung zunehmend auch eine wichtige Rolle zur Verstärkung von Kunststoffen und Betonen. Die dabei zum Einsatz kommenden Verstärkungsfasern müssen neben ihrer funktionalisierten Oberfläche zur besseren Anbindung an ihr umgebendes Medium gleichzeitig hohe Zugfestigkeiten aufweisen.

Viele Faserwerkstoffe werden in textiltechnischen Folgeprozessen wie Garnen, Zwirnen, Weben, sonstige Flächengebilde u.ä. zu textilen Produkten weiterverarbeitet. Auch hier sind die mechanischen Kennwerte von großer Bedeutung, da diese Produkte überwiegend zur Verstärkung eingesetzt werden.

Temperaturbeständige Mineralfasern bestehen vorwiegend aus den Oxiden SiO₂, Al₂O₃ und CaO mit Gewichtsanteilen von SiO₂ über 40 Gew.-%. In Abhängigkeit ihres Anwendungsgebietes können sie gezielt in ihrer chemischen Zusammensetzung durch den Zusatz von Alkali- und Erdalkalioxiden (z.B. Li₂O, Na₂O, K₂O, MgO, CaO) und Übergangsmetalloxide (z.B. TiO₂, ZrO₂ und Y₂O₃) modifiziert werden. Man unterscheidet grob Aluminiumsilikatfasern oder RCF (Refractory Ceramic Fiber), Hochtemperaturglasfasern, AES (biolösliche Fasern), polykristalline, über Sol-Gel-Prozesse hergestellte Fasern und Silikatfasern.

Für die Herstellung von Glasfasern verwendet man Glasrohstoffe, Altgläser, vulkanisches Gestein oder Kalkstein, wobei die Bezeichnungen die jeweilige Rohstoffbasis andeuten. Die Schmelzen aus Glas und Gesteinsmischungen werden über Faserbildungseinrichtungen zu Fasern mit einem Durchmesser von 5 bis 30 *µ*m verarbeitet, wobei grundsätzlich vier Verfahren zur Herstellung von Glasfasern unterschieden werden. Die Filamente werden zu hundert oder mehr gebündelt und auf einer Trommel als sog. Spinnfäden aufgezogen.

Beim Düsenziehverfahren fließt die homogen aufgeschmolzene Glasmasse kontinuierlich durch hunderte Düsenbohrungen einer Platindüsenwanne. Durch Ausnutzung der Schwerkraft und der Ziehkraft werden Glasfasern mit einem Durchmesser von 5 bis 30 *µ*m hergestellt. Durch die Gravitation bleibt die Menge an nachfließender Glasschmelze konstant, wobei durch die Variation der Ziehgeschwindigkeit der Durchmesser der Glasfilamente gesteuert werden kann. Die austretenden Filamente werden unter Einwirken von Konvektionskühlung oder Wasserkühlung abgekühlt und auf eine Trommel aufgezogen. Vor dem Wickelprozess werden die Filamente beschlichtet.

Beim Stabziehverfahren werden mehrere Glasstäbe mit einem Durchmesser von 2 bis 8 mm nebeneinander eingespannt und das untere Ende mit einer Brennerflamme bis zum Erweichen erhitzt. Das am unteren Ende des Glasstabs aufgeschmolzene zähflüssige Glas wird durch die Schwerkraft und Ziehkraft zu einem Glasfaden gezogen. Über das Stabziehverfahren werden bevorzugt Glasfaservliese und Textilglasgarne hergestellt.

Beim Schleuderverfahren wird die Glasschmelze mit Hilfe der Zentrifugalkraft unter Einwirken eines Luftstroms zu Mineralfasern zerfasert, die als Rohfilz in Sammelkammern oder Fallschächten gesammelt werden.

Mit dem Düsenblasverfahren können sehr feine und kurze Glasfasern gewonnen werden. Dabei wird die Glasschmelze mit hohem Druck und Geschwindigkeiten bis zu 100 m/s durch Düsen am Boden der Schmelzwanne vorangetrieben. Die Fasern zerreißen dabei in kurze Stücke.

Das an sich spröde Glas besitzt bei Raumtemperatur, zu einem dünnen Faden ausgezogen, eine hohe Flexibilität und Zugfestigkeit. Anders als Aramidfasern oder Kohlenstofffasern, zeichnet sich die Glasfaser durch eine amorphe Struktur aus. Wie beim kompakten Fensterglas ist die molekulare Orientierung regellos. Ein Glas kann daher als erstarrte Flüssigkeit angesehen werden. Bei Überschreiten einer gewissen Temperatur, die als Glastemperatur oder Transformationstemperatur (T_{G}) bezeichnet wird, tritt eine Entkopplung der Netzwerke ein, wodurch jedes Glas eine Änderung in seiner Formbeständigkeit erfährt. Dabei gehen ganze oder teilweise amorphe Bereiche in einen gummielastischen und hochviskosen Zustand über. Über der Transformationstemperatur sinken die Steifigkeit und die Festigkeit von amorphen Glasfasern deutlich.

Der Fachmann versteht unter dem Begriff "Transformationstemperatur" (T_{G}) definitionsgemäß die Temperatur, die zur Kennzeichnung der Lage des Transformationsbereichs eines Glases dient. Die Transformationstemperatur gilt als Grenze zwischen dem spröd-elastischen Verhalten eines erstarrten Glases und dem zähplastischen Verhalten erweichten Glases. Die Transformationstemperatur liegt im Mittel bei einer Viskosität von 10^{13,3} dPa·s und kann nach DIN ISO 7884-8:1998-02 bestimmt werden. Der Transformationsbereich bildet dabei den Übergang vom elastisch-spröden Verhalten zum hochviskos flüssigen Verhalten des Glases. Die Längenänderung eines Glases ist oberhalb des sogenannten Transformationsbereiches, dessen Mittelwert etwa durch den Transformationspunkt T_{G} gekennzeichnet wird, größer als unterhalb.

Im Ergebnis können Gläser ausschließlich unterhalb der Transformationstemperatur mechanische Belastungen aufnehmen, da sie oberhalb der Transformationstemperatur hochviskos flüssig sind. Für Produkte, die eine erhöhte Temperaturbeständigkeit aufweisen müssen, besteht daher ein enormer Bedarf an Glasfasern, die durch eine hohe Transformationstemperatur gekennzeichnet sind.

WO 96/39362 und DE 2 320 720 A1 beschreiben borsäure- und fluorfreie Glasmischungen für die Herstellung von Glasfasern, so dass die Umweltbelastungen im Vergleich zur Herstellung von Glasfasern auf der Basis von E-Glas minimiert sind. Um dennoch die Eigenschaften, Schmelz- und Verarbeitungsbedingungen von E-Gläsern zu erreichen, wird der Glasmischung ein hoher Anteil an MgO als Substitut für die Oxide CaO oder TiO₂ von mindestens 2,0 Gew.-% zugefügt. Durch den hohen Anteil an MgO weisen derartige Glaszusammensetzungen allerdings eine starke Neigung zur Ausbildung von Mischkristallen auf, so dass die resultierenden Gläser eine grobkristalline Struktur besitzen. Nachteilig bei diesen Gläsern sind die geringe chemische und thermische Beständigkeit sowie die Neigung zu Spannungsrissen.

US 3,847,627 A offenbart eine Glaszusammensetzung mit einem hohen CaO-Gehalt im Bereich von 17 bis 24 Gew.-% und einen MgO-Gehalt im Bereich von 1,5 bis 4,0 Gew.-%, bei der die Faserbildungstemperatur mindestens bei einer Temperatur von 1228°C liegt. Dem Dokument sind dabei keine Werte für die Transformationstemperatur zu entnehmen.

So sind aus EP 2 321 231 A1 hochtemperatur- und chemisch beständige Glasfasern auf Basis eines niedrigen Anteils an Fe₂O₃ aber einem alternativen Zusatz von Cr₂O₃ bekannt, die eine gute Lichttransmission/Brechungsindex aufweisen. Die Temperaturbeständigkeit der beschriebenen Glaszusammensetzung liegt bei ca. 760°C. Für eine Reihe von Einsatzzwecken ist die Temperaturbeständigkeit nicht befriedigend. Weiterhin nachteilig liegt die für die Herstellung von Glasfasern notwendige Faserbildungstemperatur über 1270°C. Kommerziell sind gegenwärtig zwei Glasfasertypen bekannt, deren Temperaturbeständigkeit bereits deutlich über der Transformationstemperatur von 760°C liegt.

Zum einen sind dies die sog. S-Glasfasern bzw. HM-Glasfasern, die durch eine hohe Festigkeit und ein hohes E-Modul charakterisiert sind und daher zur Verstärkung von Bauteilen eingesetzt werden, an deren Festigkeit und vor allem an deren Steifigkeit höhere Anforderungen gestellt werden. Nachteilig werden bei einigen Gläsern sehr reine, teure Oxide eingesetzt statt der üblichen Glasrohstoffe, wobei durch die hohen Schmelztemperaturen dieser Oxidgemenge von ca. 1700°C zugleich eine erhöhte Korrosion der Glasschmelzwannen und ihrer Bestandteile erfolgen. Eine erhöhte Korrosion verkürzt zum einen die Standzeit der Glasschmelzwanne und zum anderen bewirkt sie eine Verschlechterung der Glasqualität, weshalb spezielle Schmelzverfahren erforderlich sind.

Um wirtschaftlich attraktive Standzeiten der Bauteile von Schmelzwannen zu erreichen, sollte die Schmelztemperatur einer Glaszusammensetzung unterhalb von 1400°C liegen. Allerdings haben die derzeit bekannten Glaszusammensetzungen den Nachteil, dass bei Herabsetzung der Schmelztemperatur auch die für die Temperaturbeständigkeit eines Glases charakteristische Transformationstemperatur abgesenkt wird.

Zum anderen sind chemisch nachbehandelte temperaturbeständige Glasfasern bekannt, die sowohl aus E-Glas als auch aus speziellen Glasfasern hergestellt werden. Die speziellen Glasfasern bestehen vor der chemischen Behandlung hauptsächlich aus SiO₂ und Na₂O. In zusätzlichen Schritten werden aus den Glasfasern über eine längere Zeit in heißer Säure bestimmte Oxide (Na₂O) ganz oder teilweise extrahiert, anschließend neutralisiert, chemisch nachbehandelt und geschlichtet. Derart nachbehandelte Glasfasern sind bis zu einer Temperatur von 1000°C belastbar. Auf Grund des komplexen Herstellungsverfahrens sind derartige Gläser teuer in der Herstellung.

Nach wie vor besteht daher ein erhöhter Bedarf an temperaturbeständigen Alumosilikat-Glasfasern mit verbesserten Eigenschaften. Insbesondere besteht ein Bedarf, eine temperaturbeständige Alumosilikat-Glasfaser bereitzustellen, die in Bezug auf ihre Temperaturbeständigkeit eine Lücke zu den handelsüblichen C-, E- und ECR-Gläsern und den teuren chemisch nachbehandelten Gläsern auf der anderen Seite, die bis zu einer Temperatur von 1000°C belastbar sind, schließt.

Aufgabe der Erfindung ist es daher, eine temperaturbeständige Alumosilikat-Glasfaser bereitzustellen, die sich durch eine Transformationstemperatur >760°C auszeichnet, wobei die Schmelztemperatur (T_{S}) sowie die Faserbildungstemperatur (T_{F}) als auch die Liquidustemperatur (T_{L}) möglichst niedrig sind. Aus Emissionsschutzgründen ist auf den Einsatz von Bor- und Fluorverbindungen zu verzichten.

Erfindungsgemäß wird die Aufgabe durch eine temperaturbeständige Alumosilikat-Glasfaser gemäß des Anspruchs 1 gelöst. Bezogen auf das jeweilige Oxid bedeutet ein Anteil von 0 Gew.-%, dass das Oxid mit einem Anteil unterhalb der Nachweisgrenze vorhanden sein kann. Ausgenommen sind dabei rohstoff- oder prozesstechnisch bedingte Verunreinigungen.

Die temperaturbeständige Alumosilikat-Glasfaser besteht dabei aus einer borsäurefreien Zusammensetzung, die ohne den Zusatz von boroxidhaltigen Rohstoffen erschmolzen wird. Überraschend wurde gefunden, dass das amorphe SiO₂-Netzwerk der Alumosilikat-Glasfasern durch die Dotierung mit Strontium- und/oder Kupfer- und/oder Zirkoniumatomen gezielt beeinflusst werden kann, was zu einer Änderung physikalischer Parameter des Werkstoffs führt, insbesondere Transformationstemperatur (T_{G}), Schmelztemperatur (T_{S}) und Faserbildungstemperatur (T_{F}). Dabei haben sich die genannten Gewichtsanteile dieser Oxide als besonders geeignet erwiesen, mechanische Kennwerte (z.B. Zugfestigkeit, Elastizitätsmodul, Elastizität, Elongation, Bruchkraft, Flexibilität, u.a.) der erfindungsgemäßen Glasfasern gegenüber den aus dem Stand der Technik bekannten Glasfasern (E-Glas, ECR-Glas und C-Glas) zu erhöhen.

Beim Abkühlen der Schmelze behindert die Dotierung des amorphen SiO₂-Netzwerks mit Fremdionen nachweislich den Übergang von der metastabilen amorphen Modifikation in die energetisch begünstigte, kristalline Modifikation. Überraschend erweisen sich Dotierungen mit Netzwerkwandlern wie Strontium- und/oder Kupfer- und/oder Bariumatomen dabei als besonders vorteilhaft.

Durch eine Dotierung des SiO₂-Netzwerks bekannter Glaszusammensetzungen mit den genannten Netzwerkwandlern lässt sich T_{G} auf über 760°C erhöhen, wobei gleichzeitig T_{S} und T_{F} abgesenkt werden oder konstant bleiben. Durch die gewählte Zusammensetzung ist eine derartige Glasschmelze zur Herstellung von kontinuierlichen Glasfasern bei niedriger Temperatur geeignet.

Der Zusatz von ZrO₂ hebt die Transformationstemperatur höher an als Al₂O₃, erhöht aber zugleich die Schmelztemperatur.

Überraschend hat sich gezeigt, dass die Transformationstemperatur durch die Oxide CaO, SrO und BaO kaum beeinflusst wird, während die Oxide SiO₂, Al₂O₃, MgO, ZrO₂ und TiO₂ die Transformationstemperatur erhöhen. Dagegen senken die Oxide Na₂O, K₂O und CuO die Transformationstemperatur bereits in kleinen Mengen sehr deutlich.

Weiterhin wurde gefunden, dass die Oxide SiO₂, Al₂O₃ und ZrO₂ die Schmelztemperatur T_{S} und die Faserbildungstemperatur T_{F} erhöhen. Im Gegensatz dazu senkt das Oxid Fe₂O₃, das über die Rohstoffe unbeeinflusst in das Glas gelangt, sowohl die Transformationstemperatur als auch die Schmelztemperatur T_{S} und Faserbildungstemperatur T_{F}.

Der Zusatz von TiO₂ erhöht die Transformationstemperatur und senkt die Faserbildungstemperatur und Schmelztemperatur.

Hingegen trägt ein zugesetzter Anteil von CuO zu einer Verringerung von T_{S} und T_{F} bei. ZrO₂ zu Lasten von SiO₂ erhöht neben T_{G} auch die Schmelz- und Faserbildungstemperatur. Die erfindungsgemäßen Glasfasern können sowohl in Form von Filamenten als auch in Form von Stapelfasern vorliegen.

Der Faserdurchmesser der erfindungsgemäßen Glasfasern beträgt vorzugsweise 5-30 *µ*m, besonders bevorzugt 5-25 *µ*m.

In der Ausgestaltung der Erfindung weist die Zusammensetzung der erfindungsgemäßen Alumosilikat-Glasfaser die folgenden Anteile (bezogen auf die Gesamtzusammensetzung) an Oxiden auf:

| | |
|---|---|
| 52-60 Gew.-% | SiO₂ |
| 14-16 Gew.-% | Al₂O₃ |
| < 0,4 Gew.-% | Fe₂O₃ |
| 0,03-0,3 Gew.-% | Na₂O |
| 0,3-0,7 Gew.-% | K₂O |
| 20-22 Gew.-% | CaO |
| 0,4-0,8 Gew.-% | MgO |
| 1-5 Gew.-% | TiO₂ |
| 0,5-3 Gew.-% | BaO |
| 0-2 Gew.-% | SrO |
| 0-3 Gew.-% | ZrO₂ |
| 0-1 Gew.-% | CuO, |

wobei der Gesamtanteil der Alkalimetalloxide (Na₂O und K₂O) in Summe maximal 1,0 Gew.-% beträgt,
wobei der Gesamtanteil der Oxide SrO, CuO, ZrO₂ in einem Bereich von 0,1 bis 4,0 Gew.-% liegt und
wobei die temperaturbeständigen Alumosilikat-Glasfaser eine Transformationstemperatur >760°C und eine Faserbildungstemperatur (Viskosität von 10^{3,0} dPa·s) <1260°C, bevorzugt ≤1230°C, aufweist.

Die erfindungsgemäße Alumosilikat-Glasfaser weist nach ihrer Herstellung die folgenden Eigenschaften auf:
a) eine Transformationstemperatur >760°C,
b) eine Faserbildungstemperatur <1260°C, bevorzugt ≤1230°C,
c) eine Schmelztemperatur <1400°C.

Überraschend hat sich gezeigt, dass die Ausgangsreißfestigkeit der erfindungsgemäßen Glasfasern und der daraus hergestellten Gewebe nach ihrer Herstellung ca. 15% über den Ausgangsreißfestigkeiten der aus dem Stand der Technik bekannten E-Gläsern bzw. ECR-Gläsern liegt.

Besonders vorteilhaft ist die verbleibende Restfestigkeit (relative Restreißfestigkeit) der erfindungsgemäßen Glasfasern mit einem Durchmesser im Bereich zwischen 9 bis 15 *µ*m und der daraus hergestellten Gewebe nach einer Temperaturbelastung von 760°C im Bereich von 10% bis 15% gegenüber der Ausgangsreißfestigkeit bei Raumtemperatur.

Die Festigkeit ist eine Werkstoffeigenschaft und beschreibt den mechanischen Widerstand, den ein Werkstoff einer plastischen Verformung entgegensetzt. Erfindungsgemäß wird unter der Festigkeit die Zugfestigkeit verstanden. Die Zugfestigkeit ist die höchste Widerstandsfähigkeit der Glasfaser gegenüber einer Zugbeanspruchung, ohne zu brechen. Die Zugfestigkeit und Dehnung bei Höchstkraft werden im Zugversuch gemessen, der dem Fachmann bekannt ist.

Definitionsgemäß ist die Restreißfestigkeit als die verbleibende Reißfestigkeit einer Glasfaser oder eines Gewebes daraus nach einer thermischen oder chemischen Belastung derselben. Die verbleibende Restfestigkeit (relative Restreißfestigkeit) nach der thermischen oder chemischen Belastung einer Glasfaser oder eines Gewebes daraus kann dabei als prozentualer Anteil bezogen auf die Ausgangsreißfestigkeit der Glasfaser oder des Gewebes angegeben werden.

Bestimmt wird die Restreißfestigkeit einer Glasfaser oder eines Gewebes daraus vor bzw. nach einer Temperaturbelastung durch das Einspannen in eine geeignete Reißprüfmaschine und unter Einwirkung einer konstanten Vorschubgeschwindigkeit bis zum Reißen der Glasfaser oder des Gewebes daraus.

Zur Temperaturbehandlung werden Prüfgewebe als Streifen (5 x 30 cm) in einem Thermoschrank bei einer konstanten Temperatur für 1 h behandelt. Nach Abkühlung wird die Reißfestigkeit durch Ermittlung der Kraft in Newton und die Längenänderung in Millimeter dieser Prüfgewebe bestimmt.

Bestimmt werden die Ausgangsfestigkeit des Prüfgewebes ohne thermische Belastung und die Reißfestigkeit des thermisch behandelten Prüfgewebes. Die relative Restreißfestigkeit ergibt sich dabei aus dem prozentualen Verhältnis der Reißfestigkeit des thermisch behandelten Prüfgewebes zur Ausgangsfestigkeit des thermisch unbehandelten Prüfgewebes.

Überraschenderweise hat sich weiterhin gezeigt, dass die Alumosilikat-Glasfasern mit der erfindungsgemäßen Zusammensetzung, enthaltend die Oxide SrO, ZrO₂, und/oder CuO, eine gute Laugenbeständigkeit aufweisen.

Methoden zur Bestimmung der Laugenbeständigkeit von Glasfasern sind dem Fachmann bestens bekannt und können entsprechenden Leitlinien, wie bspw. ETAG 004 (External Thermal Insulation Composite Systems with Rendering - Edition 08/2011 - Langzeitbestimmung) oder der DIN EN 13496:1999-06 (Kurzzeitbestimmung) entnommen werden.

Gewebe aus Alumosilikat-Glasfasern der erfindungsgemäßen Zusammensetzung weisen vorteilhaft nach einer Kurzeit-Laugenbehandlung (nach DIN EN 13496:1999-06) eine Restreißfestigkeit von mindestens 70% und nach einer Langzeit-Laugenbehandlung (gemäß ETAG 004) von mindestens 65% auf.

Es hat sich gezeigt, dass Na₂O und K₂O wasserlösliche Oxide sind, die u.a. zu einer unerwünschten Herabsetzung der Transformationstemperatur T_{G} beitragen. In der bevorzugten Ausgestaltung der Erfindung weist die erfindungsgemäße Glaszusammensetzung die Alkalioxide Na₂O und K₂O in Summe maximal mit einem Gesamtanteil von 1,0 Gew.-% auf. Vorzugsweise weist die erfindungsgemäße Glaszusammensetzung das Alkalioxid Na₂O mit einem Anteil von maximal 0,25 Gew.-% auf.

Erschwerend wurde jedoch gefunden, dass die meisten Oxide miteinander interagieren und dadurch die Effekte einzelner Oxide in der erfindungsgemäßen Glaszusammensetzung sehr stark von deren Anteil abhängig sind. Eine besonders bevorzugte Glaszusammensetzung der erfindungsgemäßen Alumosilikat-Glasfaser ist daher dadurch gekennzeichnet, dass der Anteil (bezogen auf die Gesamtzusammensetzung) an SiO₂ in einem Bereich von 54,0 bis 58,0 Gew.-% liegt. Die Glaszusammensetzung der erfindungsgemäßen Alumosilikat-Glasfaser weist einen Anteil an Al₂O₃ im Bereich von 14,0 und 16,0 Gew.-% und einen Anteil an CaO im Bereich von 20,0 bis 22,0 Gew.-% auf.

Vor demselben Hintergrund weist die erfindungsgemäße Glaszusammensetzung die förderlichen Oxide MgO und Fe₂O₃ vorzugsweise mit einem Anteil für MgO im Bereich von 0,5 bis 0,8 Gew.-% bzw. für Fe₂O₃ mit maximal 0,3 Gew.-% auf.

In einer besonders vorteilhaften Ausgestaltung der Erfindung weist die erfindungsgemäße Glaszusammensetzung die Oxide TiO₂ und BaO in Summe mit einem Gesamtanteil in einem Bereich von 4,0 bis 6,0 Gew.-% auf.

Erfindungsgemäße Glasfasern mit einer besonders bevorzugten Glaszusammensetzung weisen eine Transformationstemperatur von mindestens 765°C, ganz besonders vorteilhaft von mindestens 770°C auf. Durch die hohe Transformationstemperatur können die erfindungsgemäßen Glasfasern besonders vorteilhaft höhere Belastungen aufnehmen. Gleichzeitig können die erfindungsgemäßen Glaszusammensetzungen wirtschaftlich erschmolzen und zu Glasfasern gebildet werden.

Grundsätzlich führt eine Temperaturbelastung von Glas zur Bildung von Defekten im SiO₂-Netzwerk. Diese Strukturschädigung des SiO₂-Netzwerks bleibt nach dem Abkühlen auf Raumtemperatur erhalten.

Aufgrund der erfindungsgemäßen Zusammensetzung der Oxide zeichnen sich die aus der Schmelze gewonnen Glasfilamente nach einer Temperaturbelastung von 760°C durch eine verbleibende Reißfestigkeit aus, die gleich oder höher ist als die Reißfestigkeit von E-Glas, ECR-Glas und C-Glas nach der gleichen Temperaturbelastung.

Die erfindungsgemäßen temperaturbeständigen Alumosilikat-Glasfasern weisen nach einer Temperaturbelastung von 760°C eine geringere Strukturschädigung des SiO₂-Netzwerks gegenüber den aus dem Stand der Technik bekannten Glasfasern (E-Glas, ECR-Glas und C-Glas) auf. Die erfindungsgemäßen Alumosilikat-Glasfasern zeichnen sich daher nach einer Temperaturbelastung von 760°C durch eine verbleibende Reißfestigkeit von mindestens 10% gegenüber der Ausgangsfestigkeit (Ausgangsreißfestigkeit) bei Raumtemperatur ohne Temperaturbelastung aus.

Die erfindungsgemäßen Glasfasern können sowohl in Form von Filamenten als auch in Form von Stapelfasern vorliegen.

Gegenstand der Erfindung ist auch ein Verfahren zur Herstellung einer temperaturbeständigen Glasfaser, das die folgenden Schritte aufweist:
a. Bereitstellung einer Glasschmelze gemäß der Zusammensetzung nach Anspruch 1.
b. Überführung der Schmelze in Filamente oder Stapelfasern,
c. Kühlen der erhaltenen Filamente oder Stapelfasern,
d. Spulen der Filamente zu Spinnfäden oder Herstellen von Flächengebilden,
e. Trocknung der erhaltenen Filamente oder Stapelfasern oder Flächengebilde.

Das erfindungsgemäße Verfahren hat den Vorteil, dass temperaturbeständige Glasfasern hergestellt werden, wobei die Restfestigkeit der Fäden und Gewebe nach einer Temperaturbelastung von 760°C noch 10% gegenüber der Ausgangsfestigkeit bei Raumtemperatur beträgt.

Es hat sich nun vorteilhaft gezeigt, dass die Restreißfestigkeit der erfindungsgemäßen Glasfasern mit einem Durchmesser im Bereich zwischen 9 bis 15 *µ*m und der daraus hergestellten Gewebe nach einer Temperaturbelastung von 760°C im Bereich zwischen 10% und 15% gegenüber der Ausgangsreißfestigkeit bei Raumtemperatur beträgt.

Die Erfindung hat den weiteren Vorteil, dass für eine wirtschaftliche Herstellung und einen stabilen Prozessablauf in der Faserherstellung die Schmelztemperatur (T_{S}), die Liquidustemperatur (T_{L}) sowie die Faserbildungstemperatur (T_{F}) herabgesenkt werden.

So weist die erfindungsgemäße Glaszusammensetzung die folgenden Eigenschaften auf:
a) eine Tranformationstemperatur >760°C,
b) eine Faserbildungstemperatur <1260°C,
c) eine Schmelztemperatur <1400°C.

Überraschend hat sich gezeigt, dass durch den erfindungsgemäßen Anteil an SrO die Zähigkeit (Viskosität) der Glasschmelze bei hohen Temperaturen für T_{S} und T_{F} gesenkt wird, und somit vorteilhaft das Fließverhalten (Rheologie) der Glasschmelze verbessert wird.

Es wurde erfreulicherweise gefunden, dass der erfindungsgemäße Anteil an TiO₂ die Schmelztemperatur der Glaszusammensetzung absenkt. Ferner wirken TiO₂, SrO und CuO bei höheren Temperaturen vorteilhaft als Flussmittel, wodurch die Viskosität der Glaszusammensetzung im Niedertemperaturbereich (Transformationsbereich T_{G}) erhöht wird. Nachteilig scheint ein zu hoher Anteil an TiO₂ zu sein der die unerwünschte Kristallisation unterstützt.

In einer besonders bevorzugten Ausgestaltung der Erfindung weist eine erfindungsgemäße Glaszusammensetzung TiO₂ mit einem Anteil von 1 bis 5 Gew.-%, ganz besonders bevorzugt 2,5 bis 3,5 Gew.-% auf.

Vorzugsweise weist die erfindungsgemäße Glasschmelze das Erdalkalioxid Na₂O mit einem Anteil von maximal 0,25 Gew.-% auf.

Eine besonders bevorzugte Zusammensetzung der erfindungsgemäßen Glasschmelze ist daher dadurch gekennzeichnet, dass der Anteil (bezogen auf die Gesamtzusammensetzung) an SiO₂ in einem Bereich von 54,0 und 58,0 Gew.-% liegt. Die Zusammensetzung der erfindungsgemäßen Glasschmelze weist einen Anteil an Al₂O₃ im Bereich von 14,0 und 16,0 Gew.-% und einen Anteil an CaO im Bereich von 20,0 und 22,0 Gew.-% auf.

Die erfindungsgemäße Glasschmelze weist die förderlichen Oxide MgO und Fe₂O₃ vorzugsweise mit einem Anteil für MgO im Bereich von 0,5 und 0,8 Gew.-% bzw. für Fe₂O₃ mit einem Anteil von maximal 0,3 Gew.-% auf.

In einer besonders vorteilhaften Ausgestaltung der Erfindung weist die Zusammensetzung der erfindungsgemäßen Glasschmelze die Oxide TiO₂ und BaO in Summe mit einem Gesamtanteil in einem Bereich zwischen 4,0 bis 6,0 Gew.-% auf.

Oberhalb der Liquidustemperatur (T_{L}) ist das Glas vollständig geschmolzen und es existieren keine Kristalle mehr.

Die Faserbildungstemperatur (T_{F}) ist die Temperatur einer Glasschmelze, bei der die Viskosität der Schmelze 10³ dPa·s beträgt. Eine niedrige T_{F} vereinfacht dabei den Ziehprozess zur Überführung der Schmelze in Filamente. Bei dieser Viskosität ist die Beanspruchung bei der Faserherstellung am geringsten, wodurch sich die Festigkeit der Faser erhöht. Außerdem wird weniger Energie benötigt und können somit die Produktionskosten gering gehalten werden.

Erfindungsgemäß wird ein Oxidgemenge bereitgestellt, das in einer Schmelzwanne mittels Gas- und/oder Elektroschmelze bis zur Verflüssigung erhitzt wird. Anschließend wird die homogene Glasschmelze in Glasfilamente oder Stapelfaser überführt.

Nach dem vollständigen Erschmelzen des Gemenges und der Homogenisierung der Glasschmelze erfolgt vor der Überführung der Schmelze in Filamente die Läuterung der Glasschmelze. Die Läuterung dient zur Austreibung und Reduzierung der Gasanteile aus der Glasschmelze. Additive zur Läuterung sind vielfach vorbeschrieben und dem Fachmann daher grundsätzlich bekannt. So werden zur Läuterung der Glasschmelze im Allgemeinen neben Ammoniumnitrat bevorzugt Natriumnitrat bzw. Natriumsulfat zugesetzt.

Überraschend wurde nun gefunden, dass durch den Zusatz von BaO die Transformationstemperatur nicht beeinflusst wird, jedoch vorteilhaft die Temperaturen T_{S} und T_{F} gesenkt werden können.

In einer besonders bevorzugten Ausgestaltung des erfindungsgemäßen Verfahrens wird bei der Bereitstellung der Glasschmelze an Stelle von Natriumsulfat oder Natriumnitrat ein Anteil des Gesamtanteils an BaO als Bariumsulfat mit einem Anteil von 0,4 Gew.-% zugesetzt. Vorteilhafterweise dient der Zusatz von Bariumsulfat als Läutermittel.

Die Überführung der Schmelze in Filamente erfolgt dabei nach dem Düsenziehverfahren, wobei die aus den Düsen austretenden Filamente gekühlt werden. Die Wärmeabfuhr erfolgt dabei bevorzugt über die Konvektions- und/oder Wasserkühlung.

Durch die hohen Ziehgeschwindigkeiten, die während der Überführung der Glasschmelze in Glasfilamente auf die aus den Düsen austretenden Glasfäden einwirken, entsteht eine Glasstruktur, die besonders anfällig für oberflächennahe Defekte (z.B. Griffith-Risse) ist.

Nach einer Ausgestaltung des erfindungsgemäßen Verfahrens werden daher die aus der Glasschmelze erhaltenen Glasfilamente nach dem Kühlvorgang mit einer Schlichte behandelt, durch die oberflächennahe Defekte repariert bzw. geschlossen werden können. Die Beseitigung oberflächennaher Defekte verhindert eine Fortpflanzung offener Strukturen, wodurch die Rissanfälligkeit der Glasfilamente reduziert wird. Durch die Schlichtung der Glasfasern wird auch die Festigkeit des Werkstoffs erhöht.

Die Hauptaufgabe der Schlichten besteht darin, dass die Glasfasern für die weiteren Prozessschritte geschützt sind. Erfindungsgemäße Glasfasern und deren Produkte (z.B. Gewebe), die nicht entschlichtet werden, erhalten mit der Schlichte bereits Haftvermittler für die jeweiligen Anwendungen.

Gröbere Gewebe aus Direktrovings weisen eine Schlichte auf, die mit der Matrix kompatibel ist. Aus diesem Grund werden diese Gewebe nicht entschlichtet.

Gewebe aus feineren Fäden haben üblicherweise eine Schlichte aus überwiegend organischen, z.T. fettigen Substanzen, die entfernt werden müssen. Die Entfernung der Schlichte erfolgt durch thermische Behandlung bei Temperaturen über 400°C. Nach dieser Entschlichtung wird wieder eine Substanz auf die Gewebe aufgetragen, die mit der jeweiligen Matrix verträglich ist. Bei den Geweben aus temperaturbeständigen Alumosilikat-Glasfasern, die thermisch entschlichtet und mit einem Finish ausgerüstet sind, ist der Festigkeitsverlust gering.

Nach einer Ausgestaltung des erfindungsgemäßen Verfahrens enthält die Schlichte bevorzugt anorganische Substanzen, wie z.B. Silane oder Substanzen aus Sol-Gel-Verfahren. Eine Silanschlichte oder Sol-Gel-Schlichtung kann im Produktionsverfahren bei Glasfasertemperaturen bis zu 100°C durchgeführt werden.

Glasfäden, die mit einer Silanschlichte behandelt wurden, zeichnen sich durch eine höhere Festigkeit aus als Glasfäden, die mit einer Schlichte ohne Silane behandelt wurden. Abschließend betrifft die vorliegende Erfindung die Verwendung von temperaturbeständigen Alumosilikat-Glasfasern, wie sie erfindungsgemäß beschrieben werden.

Die erfindungsgemäßen temperaturbeständigen Alumosilikat-Glasfasern finden nach einer bevorzugten Ausgestaltung der Erfindung zur Herstellung zugfester Glasfasern, Zwirne, Vliesstoffe, Gewebe oder Flächengebilde oder Flächengebilde für Katalysatoren, Filter oder anderer Faserprodukte Verwendung.

Zur Verwendung der erfindungsgemäßen temperaturbeständigen Alumosilikat-Glasfasern z.B. als Flächengebilde für Katalysatoren, können die temperaturbeständigen Alumosilikat-Glasfasern texturiert werden.

Bevorzugt finden die erfindungsgemäßen temperaturbeständigen Alumosilikat-Glasfasern zudem Verwendung zur Herstellung von Geweben, wobei die Gewebe aus temperaturbeständigen Alumosilikat-Glasfasern bestehen, die nach dem Weben thermisch entschlichtet und mit einem Finish ausgerüstet werden und einen geringen Festigkeitsverlust aufweisen.

### Ausführungsbeispiel 1:

Anhand des nachfolgenden Ausführungsbeispiels wird die Erfindung näher erläutert:
Um die Einflüsse der erfindungsgemäßen Anteile der Oxide SrO, CuO, ZrO₂ auf die Transformationstemperatur und die Schmelztemperatur zu verdeutlichen, wurden folgende sechs Glasschmelzen hergestellt, die in ihrer Zusammensetzung (siehe Tabelle 1) identische Anteile an Fe₂O₃, Na₂O, K₂O, CaO, MgO, TiO₂ und BaO aufweisen.

Die folgende Tabelle 1 zeigt eine Zusammenfassung derzeit verwendeter chemischer Zusammensetzungen von Alumosilikat-Glasfasern (Referenzgläser) im Vergleich zur chemischen Zusammensetzung erfindungsgemäßer temperaturbeständiger Alumosilikat-Glasfasern (Glas-Nr.: 1-6). Alle Angaben sind in Gew.-%.

**Tabelle 1: Einfluss der Oxide auf die Temperaturkenngrößen von Gläsern.**

| Komponenten | **Ausführungsbeispiele** Glas-Nr.: | | | | | | **Referenzgläser** | | |
|---|---|---|---|---|---|---|---|---|---|
| | **1** | **2** | **3** | **4** | **5** | **6** | **ECR** | **E-Glas** | **C-Glas** |
| **SiO₂** | 48,6 | 48,6 | 48,6 | 46,6 | 48,6 | 46,6 | 59,2 | 53,4 | 68,3 |
| **Al₂O₃** | 15,6 | 15,6 | 13,6 | 15,6 | 13,6 | 15,6 | 14,1 | 14,8 | 2,8 |
| **Fe₂O₃** | 0,3 | 0,3 | 0,3 | 0,3 | 0,3 | 0,3 | 0,3 | 0,2 | 0,1 |
| **Na₂O** | 0,0 | 0,0 | 0,0 | 0,0 | 0,0 | 0,0 | 0,1 | 0,2 | 13,7 |
| **K2O** | 0,6 | 0,6 | 0,6 | 0,6 | 0,6 | 0,6 | 0,6 | 0,2 | 3,0 |
| **CaO** | 19,9 | 19,9 | 19,9 | 19,9 | 19,9 | 19,9 | 22,8 | 22,4 | 5,4 |
| **MgO** | 0,6 | 0,6 | 0,6 | 0,6 | 0,6 | 0,6 | 0,3 | 0,1 | 5,0 |
| **TiO₂** | 7,9 | 7,9 | 7,9 | 7,9 | 7,9 | 7,9 | 2,6 | 0,2 | 0,2 |
| **BaO** | 0,5 | 0,5 | 0,5 | 0,5 | 0,5 | 0,5 | 0,0 | 0,0 | 0,0 |
| **SrO** | 6,0 | | 6,0 | 6,0 | | | 0,0 | 0,0 | 0,0 |
| **CuO** | | 6,0 | | | 6,0 | 6,0 | 0,0 | 0,0 | 0,0 |
| **ZrO₂** | | | 2,0 | 2,0 | 2,0 | 2,0 | 0,0 | 0,0 | 0,0 |
| **B₂O₃** | | | | | | | 0,0 | 8,5 | 1,5 |
| **T_{G}** | 775 | 767 | 783 | 785 | 775 | 778 | 753 | 675 | 527 |
| **T_{F}** | 1225 | 1169 | 1236 | 1232 | 1180 | 1112 | 1300 | 1198 | 1180 |
| **T_{S}** | 1358 | 1246 | 1375 | 1355 | 1261 | 1245 | 1459 | 1344 | 1426 |

Die Glasgemenge für die Gläser gemäß Tabelle 1 werden in einer Schmelzwanne bis zur Verflüssigung erhitzt. Unter Ausnutzung der Schwerkraft und Ziehkraft werden mit einem Düsenziehverfahren Glasfäden erzeugt, die auf eine rotierende Spule aufgezogen werden. Zur Abkühlung werden die aus den Düsen austretenden Glasfasern mittels Konvektions- und Wasserkühlung behandelt.

Die Transformationstemperatur gilt als Grenze zwischen dem spröd-elastischen Verhalten erstarrten Glases und dem zäh-plastischen Verhalten erweichten Glases. Sie liegt im Mittel bei einer Viskosität von 10^{13,3} dPa·s und wurde nach DIN ISO 7884-8:1998-02 am Schnittpunkt der Tangenten bestimmt, die an die Schenkel der geknickten Ausdehnungskurve gelegt werden.

Aus Tabelle 1 geht hervor, dass die Anteile der Oxide einen Einfluss auf die Temperaturkenngrößen (T_{G}, T_{F} und T_{S}) der einzelnen Glasfasern haben. Im Vergleich zu den Referenzgläsern weisen alle erfindungsgemäßen Versuchsgläser eine höhere T_{G} auf, wobei T_{G} größer als 760°C ist. Gleichzeitig sind T_{S} und T_{F} der erfindungsgemäßen Versuchsgläser im Mittel jeweils um 100°C bzw. 50°C erniedrigt.

Bezogen auf die erfindungsgemäßen Versuchsgläser untereinander führt ein Anteil von 6 Gew.-% SrO zu einer Erhöhung von T_{S}, T_{F} und T_{G}. Hingegen trägt ein zugesetzter Anteil von 6 Gew.-% CuO zu einer Verringerung von T_{S} und T_{F} bei. Ein Anteil von 2 Gew.-% ZrO₂ zu Lasten des Anteils an SiO₂ führt zu einer Erhöhung von T_{G}, wobei die Temperaturkenngrößen T_{F} und T_{S} durch den Anteil von CuO abgesenkt sind. TiO₂ wirkt wie SrO, es erhöht T_{G} und senkt T_{F} und T_{S}.

### Ausführungsbeispiel 2:

Um die Einflüsse der erfindungsgemäßen Anteile der Oxide SrO, CuO, ZrO₂ auf die Transformationstemperatur und die Faserbildungstemperatur zu verdeutlichen, wurden weiterhin die nachfolgenden sieben Glasschmelzen hergestellt. Der Tabelle 2 sind die entsprechenden Zusammensetzungen für die Gläser mit den Nummern 8 bis 13 zu entnehmen. Als Läutermittel wurden den Glasschmelzen jeweils ausschließlich Bariumsulfat mit einem Anteil von 0,4 Gew.-%, bezogen auf den Gesamtanteil an BaO, zugesetzt.

Tabelle 2 zeigt die chemischen Glaszusammenfassungen von drei kommerziell verfügbaren Alumosilikat-Glasfasern (Referenzgläser) im Vergleich zu sieben beispielhaften Glaszusammensetzungen erfindungsgemäßer temperaturbeständiger Alumosilikat-Glasfasern (Glas-Nr.: 7-13). Alle Angaben sind in Gew.-%.

Der Zusatz von ZrO₂ (0,3 Gew.-% in Glas-Nr. 8) erhöht T_{G}, führt gleichzeitig auch zur Steigerung von T_{F}. Durch den Zusatz von SrO (4,0 Gew.-% in Glas-Nr.: 10) kann T_{S} signifikant auf 1363°C herabgesetzt werden, wobei gleichzeitig T_{G} leicht ansteigt. Werden beide Oxide in Kombination eingesetzt (vgl. Glas-Nr.: 11 und 12), so hängen deren Effekte auf T_{G}, T_{F} und T_{L} von dem jeweilige Gesamtanteil der Glaszusammensetzung ab, wobei der Zusatz von CuO (0,1 Gew.-% in Glas-Nr.: 13) die Feinabstimmung der charakteristischen Temperaturen erlaubt.

Ferner enthält das Glas Nr.: 11 TiO₂ mit einer Gesamtkonzentration von 8,3 Gew.-%, wodurch T_{G} erhöht wird und zugleich die Schmelz- und Faserbildungstemperatur gesenkt wird.

**Tabelle 2: Einfluss der Oxide auf die Temperaturkenngrößen von Gläsern.**

| Komponente | **Ausführungsbeispiele** Glas-Nr.: | | | | | | | **Referenzgläser** | | |
|---|---|---|---|---|---|---|---|---|---|---|
| | **7** | **8** | **9** | **10** | **11** | **12** | **13** | **ECR** | **E-Glas** | **C-Glas** |
| **SiO₂** | 58,3 | 56,0 | 58,2 | 52,5 | 46,0 | 54,5 | 54,5 | 59,2 | 53,4 | 68,3 |
| **Al₂O₃** | 13,5 | 15,2 | 15,4 | 15,5 | 12,0 | 14,8 | 14,8 | 14,1 | 14,8 | 2,8 |
| **Fe₂O₃** | 0,3 | 0,3 | 0,3 | 0,3 | 0,3 | 0,3 | 0,3 | 0,3 | 0,2 | 0,1 |
| **Na₂O** | 0,0 | 0,2 | 0,2 | 0,0 | 0,0 | 0,2 | 0,2 | 0,1 | 0,2 | 13,7 |
| **K₂O** | 0,6 | 0,7 | 0,7 | 0,7 | 0,6 | 0,7 | 0,7 | 0,6 | 0,2 | 3,0 |
| **CaO** | 22,0 | 22,0 | 20,0 | 22,0 | 20,0 | 20,4 | 20,3 | 22,8 | 22,4 | 5,4 |
| **MgO** | 0,6 | 0,6 | 0,6 | 0,5 | 0,6 | 0,6 | 0,6 | 0,3 | 0,1 | 5,0 |
| **TiO2** | 2,6 | 2,6 | 2,6 | 2,4 | 8,3 | 3,5 | 3,5 | 2,6 | 0,2 | 0,2 |
| **BaO** | 2,0 | 2,0 | 2,0 | 2,0 | 0,3 | 2,0 | 2,0 | 0 | 0 | 0 |
| **SrO** | | | | 4,0 | 8,0 | 1,0 | 1,0 | 0 | 0 | 0 |
| **ZrO₂** | | 0,3 | | | 4,0 | 2,0 | 2,0 | 0 | 0 | 0 |
| **CuO** | | | | | | | 0,1 | 0 | 0 | 0 |
| **B₂O₃** | | | | | | | | 0 | 8,5 | 1,5 |
| **T_{G}** [°C] | 757 | 765 | 760 | 764 | 763 | 772 | 763 | 753 | 675 | 527 |
| **T_{F}** [°C] | 1161 | 1186 | 1212 | 1151 | 1127 | 1230 | 1215 | 1285 | 1156 | 1011 |
| **T_{S}** [°C] | 1449 | 1421 | 1482 | 1363 | 1350 | 1450 | 1448 | 1458 | 1345 | 1425 |

### Ausführungsbeispiel 3 - Bestimmung der Restreißfestigkeit nach Temperaturbelastung

Zur Bestimmung der Ausgangsreißfestigkeit werden Prüfgewebe in einer Dreifachbestimmung als Streifen (je 5 x 30 cm in Kettrichtung bzw. 5 x 30 cm in Schussrichtung) auf einer Reißprüfmaschine (Zwick GmbH & Co. KG) mit einer max. Reißkraft von 10 kN mit einem Abstand von 10 cm zwischen den Klemmen und einer konstanten Vorschubgeschwindigkeit von 100 mm/min geprüft und der Mittelwert von 3 Prüfgeweben berechnet.

### Temperaturbelastung

Für die Bestimmung der Temperaturbeständigkeit werden die Prüfgewebe als Streifen (5 x 30 cm; 9 *µ*m Glasfäden) in einem Thermoschrank bei 400°C für 1 h behandelt. Anschließend werden die Prüfgewebe aus dem Thermoschrank genommen und bei Raumtemperatur bis ca. 20°C abgekühlt.

In Übereinstimmung zum Vorgenannten werden jeweils Prüfgewebe in Form von Streifen (5 x 30 cm; 9 *µ*m Glasfäden) in einem Thermoschrank bei 500°C, 600°C, 650°C, 700°C, 750°C oder 800°C für je 1 h behandelt und anschließend bei Raumtemperatur bis ca. 20°C abgekühlt.

Die Prüfung der Restreißfestigkeit der thermobehandelten, abgekühlten Prüfgewebe erfolgt analog zur Bestimmung der Ausgangsreißfestigkeit.

In der nachstehenden Tabelle 3 sind die relativen Reißfestigkeitswerte für die einzelnen Temperaturen aufgeführt, wobei die Ausgangsreißfestigkeit mit 100% angenommen wird und die relativen Restreißfestigkeiten [in %] als Prozentsatz zur Ausgangsreißfestigkeit berechnet sind.

Als Referenzen dienten Prüfgewebe aus E-Glas bzw. ECR-Glas.

**Tabelle 3: relative Restreißfestigkeit [in %] nach Temperaturbeanspruchung.**

| Glas | **400°C** | **600°C** | **650°C** | **700°C** | **750°C** | **800°C** |
|---|---|---|---|---|---|---|
| **E-Glas** | 13 | 8 | 6 | 1 | - | - |
| **ECR** | 19 | 10 | 10 | 9 | **5** | - |
| **Glas-Nr.: 8** | 20 | 15 | 14 | 14 | **11** | **1** |

Tabelle 3 zeigt, dass die relative Restreißfestigkeit aller drei Prüfgewebe mit steigender Temperaturbelastung (von 400 auf 700°C) abnimmt. Während Prüfgewebe aus E-Glas nach einer Temperaturbelastung von 750°C keine Restfestigkeit aufweisen, weisen Prüfgewebe aus ECR-Glas noch eine relative Restreißfestigkeit von 5% gegenüber der Ausgangsreißfestigkeit auf. Überdies weisen Prüfgewebe aus Glasfasern der erfindungsgemäßen Zusammensetzung nach einer Temperaturbelastung von 750°C eine relative Restreißfestigkeit von 11% und nach einer Temperaturbelastung von 800°C immer noch eine verbleibende relative Restreißfestigkeit von 1% gegenüber der Ausgangsreißfestigkeit auf.

### Ausführungsbeispiel 4 - Laugenbeständigkeit

In Analogie zu Ausführungsbeispiel 3 wurden die Ausgangsreißfestigkeiten der Glasfasergewebe aus erfindungsgemäßen Glasfasern des Glases-Nr.: 8 (vgl. Tabelle 2, Ausführungsbeispiel 2) bei einer konstanten Vorschubgeschwindigkeit von (50 ± 5) mm/min bestimmt. Als Referenzen dienten jeweils Prüfgewebe aus E-Glas bzw. ECR-Glasfasern.

### Kurzzeit-Laugenbehandlung gemäß DIN EN 13496:1999-06

Für die Bestimmung der Restreißfestigkeit nach einer Kurzzeit-Laugenbehandlung gemäß DIN EN 13496:1999-06 werden die Prüfgewebe als Streifen (5 cm x 30 cm; 9 *µ*m Glasfäden) 24 Stunden bei einer Temperatur von (60 ± 2)°C in eine alkalische Lösung (1 g NaOH, 4 g KOH, 0,5 g Ca(OH)₂ auf einen Liter destilliertes Wasser) in Schussrichtung getaucht und gelagert. Die Bestimmung der Laugenbeständigkeit erfolgt pro Prüfgewebe jeweils als siebenfache Bestimmung.

Als Referenz werden die jeweiligen Prüfgewebe unter Umgebungsbedingungen für mindestens 24 h bei (23 ± 2)°C und (50 ± 5)% relativer Luftfeuchte gelagert.

Nach der Lagerung in der alkalische Lösung werden die Prüfgewebe solange mit fließendem Leitungswasser bei einer Temperatur von (20 ± 5)°C gewaschen, bis der pH-Wert an der Oberfläche, gemessen mit einem pH-Indikator-Papier, kleiner als pH 9 ist. Anschließend werden die Prüfgewebe für 1 h in 0.5%-iger Salzsäure gelagert. Nach dieser Lagerung werden die Prüfgewebe ohne stärkere Bewegung in fließendem Leitungswasser gewaschen, bis ein pH-Wert von 7, gemessen mit pH-Indikator-Papier, erreicht ist. Die Prüfgewebe werden für 60 min bei (60 ± 2)°C getrocknet und anschließend mindestens 24 h bei (23 ± 2)°C und (50 ± 5)% relativer Luftfeuchtigkeit gelagert, bevor sie geprüft werden.

Zur Ermittlung der Restreißfestigkeit (vgl. Tabelle 4) werden die Prüfgewebe in der Reißprüfmaschine eingespannt und bei einer konstanten Vorschubgeschwindigkeit von (50 ± 5) mm/min bis zum Reißen des Prüfgewebes gezogen. Während der Prüfung wird die Kraft in Newton und die Längenänderung in Millimeter ermittelt.

Nach der Laugenbehandlung gemäß DIN EN 13496:1999-06 wurde für alle Prüfgewebe eine vergleichbare relative Restreißfestigkeit von 75% bzw. 76% ermittelt.

### Langzeit-Laugenbehandlung gemäß ETAG 004

Die Langzeit-Laugenbeständigkeit der Prüfgewebe (Gewebe) wird nach ETAG 004 (Edition 08/2011), Abschnitt 5.6.7.1.2 bestimmt. Dazu werden die Prüfgewebe als Streifen (5 cm x 5 cm; 9 µm Glasfäden) mit der erfindungsgemäßen Glaszusammensetzung gemäß Glas Nr. 8 (vgl. Tabelle 2) 28 Tage lang in eine alkalische Lösung (1 g NaOH, 4 g KOH, 0,5 g Ca(OH)₂ auf einen Liter destilliertes Wasser) bei (28 ± 2)°C in Schussrichtung getaucht.

Danach werden die Prüfkörper durch fünfminütiges Eintauchen in eine Säurelösung (5 ml 35%ige HCl verdünnt auf 4 Liter Wasser) gespült und anschließend nacheinander in 3 Wasserbäder (von jeweils 4 Litern) gelegt. Die Prüfgewebe werden 5 Minuten lang in jedem Wasserbad belassen.

Anschließend werden die Prüfgewebe 48 Stunden lang bei (23 ± 2)°C und (50 ± 5)% relative Feuchte getrocknet. Die ermittelten Restreißfestigkeiten nach der Laugenbehandlung sind in Tabelle 4 aufgeführt. Bei Textilglasgittern muss die Restreißfestigkeit mindestens 50% der Ausgangsreißfestigkeit betragen.

Für Prüfgewebe aus den erfindungsgemäßen Glasfasern des Glases-Nr.: 8 (1618,6 N/5 cm) wurde mit 69% eine vergleichbare relative Restreißfestigkeit wie für Prüfgewebe aus ECR-Glas (1488,4 N/5 cm bzw. 70%) ermittelt. Hingegen zeigten Prüfgewebe aus E-Glas lediglich eine relative Restreißfestigkeit von 64% gegenüber den entsprechend unbehandelten Prüfgeweben.

Als besonders vorteilhaft ist die höhere Ausgangsreißfestigkeit der erfindungsgemäßen Glasfasern gegenüber Glasfasern aus E-Glas oder ECR-Glas hervorzuheben, wie dies aus dem Vergleich des Glases-Nr.: 8 gegenüber E-Glas und ECR-Glas hervorgeht.

**Tabelle 4: relative Restreißfestigkeit [in %] nach Laugenbeanspruchung.**

| Glas | **Ausgangsreißfestigkeit** [N/5 cm] | **Restreißfestigkeit nach 24 h, 60°C** DIN EN 13496, [N/5 cm] / [%] | **Restreißfestigkeit nach 28 d,** ETAG 004 **Lagerung,** [N/5 cm] / [%] |
|---|---|---|---|
| **E-Glas** | 1986,7 | 1484,4 / **75** | 1264,8 / **64** |
| **ECR** | 1952,5 | 1607,4 / **76** | 1488,4 / **70** |
| **Glas-Nr.: 8** | 2345,5 | 1769,0 / **75** | 1618,6 / **69** |

## Patentansprüche

1. Temperaturbeständige Alumosilikat-Glasfaser, folgender Zusammensetzung:
| | |
|---|---|
| 52-60 Gew.-% | SiO₂ |
| 14-16 Gew.-% | Al₂O₃ |
| < 0,4 Gew.-% | Fe₂O₃ |
| 0,03-0,3 Gew.-% | Na₂O |
| 0,3-0,7 Gew.-% | K₂O |
| 20-22 Gew.-% | CaO |
| 0,4-0,8 Gew.-% | MgO |
| 1-5 Gew.-% | TiO₂ |
| 0,5-3 Gew.-% | BaO |
| 0-2 Gew.-% | SrO |
| 0-3 Gew.-% | ZrO₂ |
| 0-1 Gew.-% | CuO, |
wobei der Gesamtanteil der Alkalimetalloxide Na₂O und K₂O in Summe maximal 1,0 Gew.-% beträgt,
wobei der Gesamtanteil der Oxide SrO, CuO, ZrO₂ in einem Bereich zwischen 0,1 bis 4,0 Gew.-% liegt und
wobei die temperaturbeständige Alumosilikat-Glasfaser eine Transformationstemperatur >760°C und eine Faserbildungstemperatur <1260°C aufweist,
wobei die Restreißfestigkeit der temperaturbeständigen Alumosilikat-Glasfaser mit einem Durchmesser im Bereich zwischen 9 bis 15 *µ*m nach einer Temperaturbelastung von 760°C im Bereich zwischen 10% und 15% gegenüber der Ausgangsreißfestigkeit bei Raumtemperatur beträgt.

2. Temperaturbeständige Alumosilikat-Glasfaser nach Anspruch 1, **dadurch gekennzeichnet, dass** diese Na₂O mit einem Anteil von maximal 0,25 Gew.-% aufweist.

3. Temperaturbeständige Alumosilikat-Glasfaser nach Anspruch 1 oder 2, **dadurch gekennzeichnet, dass** diese SiO₂ mit einem Anteil im Bereich von 54,0 bis 58,0 Gew.-% aufweisen.

4. Temperaturbeständige Alumosilikat-Glasfaser nach einem der Ansprüche 1 bis 3, **dadurch gekennzeichnet, dass** diese MgO mit einem Anteil von 0,5 bis 0,8 Gew.-% und Fe₂O₃ mit einem Anteil von maximal 0,3 Gew.-% aufweist.

5. Temperaturbeständige Alumosilikat-Glasfaser nach einem der Ansprüche 1 bis 4, **dadurch gekennzeichnet, dass** diese in Form von Filamenten oder in Form von Stapelfasern vorliegen.

6. Verfahren zur Herstellung einer temperaturbeständigen Alumosilikat-Glasfaser nach einem der Ansprüche1 bis 5, das folgende Schritte aufweist:
a. Bereitstellung einer Glasschmelze, welche die folgende Anteile an Oxiden aufweist:
| | |
|---|---|
| 52-60 Gew.-% | SiO₂ |
| 14-16 Gew.-% | Al₂O₃ |
| < 0,4 Gew.-% | Fe₂O₃ |
| 0,03-0,3 Gew.-% | Na₂O |
| 0,3-0,7 Gew.-% | K₂O |
| 20-22 Gew.-% | CaO |
| 0,4-0,8 Gew.-% | MgO |
| 1-5 Gew.-% | TiO₂ |
| 0,5-3 Gew.-% | BaO |
| 0-2 Gew.-% | SrO |
| 0-3 Gew.-% | ZrO₂ |
| 0-1 Gew.-% | CuO, |
wobei der Gesamtanteil der Alkalimetalloxide Na₂O und K₂O in Summe maximal 1,0 Gew.-% beträgt,
wobei der Gesamtanteil der Oxide SrO, CuO, ZrO₂ in einem Bereich von 0,1 bis 4,0 Gew.-% liegt,
b. Überführung der Schmelze in Filamente oder Stapelfasern,
c. Kühlen der erhaltenen Filamente oder Stapelfasern,
d. Spulen der Filamente oder Herstellen von Flächengebilden,
e. Trocknung der erhaltenen Filamente oder Stapelfasern oder Flächengebilde.

7. Verfahren nach Anspruch 6, **dadurch gekennzeichnet, dass** bei der Bereitstellung der Glasschmelze ein Anteil des Gesamtanteils an BaO als Bariumsulfat mit einem Anteil von 0,4 Gew.-% zugesetztwird.

8. Verfahren nach Anspruch 6 oder 7, **dadurch gekennzeichnet, dass** die aus der Glasschmelze erhaltenen Filamente und Stapelfasern mit einer Schlichte behandelt werden.

9. Verfahren nach einem der Ansprüche 6 bis 8, **dadurch gekennzeichnet, dass** die Schlichte anorganische Substanzen enthält.

10. Verwendung einer temperaturbeständigen Alumosilikat-Glasfaser erhalten nach einem der Ansprüchen 1 bis 5 oder nach einem der Ansprüche 6 bis 9 zur Herstellung zugfester Glasfasern, Zwirne, Vliesstoffe, Gewebe oder Flächengebilde für Katalysatoren, Filter oder andere Faserprodukte.

11. Verwendung nach Anspruch 10, **dadurch gekennzeichnet, dass** die Gewebe aus temperaturbeständigen Alumosilikat-Glasfasern bestehen, die thermisch entschlichtet und mit einem Finish ausgerüstet sind.

## Claims

1. Temperature-resistant aluminosilicate glass fibre, of the following composition:
| | |
|---|---|
| 52-60 wt.% | SiO₂ |
| 14-16 wt.% | Al₂O₃ |
| <0.4 wt.% | Fe₂O₃ |
| 0.03-0.3 wt.% | Na₂O |
| 0.3-0.7 wt.% | K₂O |
| 20-22 wt.% | CaO |
| 0.4-0.8 wt.% | MgO |
| 1-5 wt.% | TiO₂ |
| 0.5-3 wt.% | BaO |
| 0-2 wt.% | SrO |
| 0-3 wt.% | ZrO₂ |
| 0-1 wt.% | CuO, |
wherein the overall proportion of the alkali metal oxides Na₂O and K₂O is in total no more than 1.0 wt.%,
wherein the overall proportion of the oxides SrO, CuO, ZrO₂ is in a range between 0.1 and 4.0 wt.%, and
wherein the temperature-resistant aluminosilicate glass fibre has a transformation temperature of >760°C and a fibre-forming temperature of <1260°C,
wherein, after a temperature load of 760°C, the residual breaking strength of the temperature-resistant aluminosilicate glass fibre having a diameter in the range between 9 and 15 µm is in the range between 10% and 15% with respect to the starting breaking strength at room temperature.

2. Temperature-resistant aluminosilicate glass fibre according to claim 1, **characterised in that** it comprises Na₂O in a maximum proportion of 0.25 wt.%.

3. Temperature-resistant aluminosilicate glass fibre according to either claim 1 or claim 2, **characterised in that** it comprises SiO₂ in a proportion in the range of from 54.0 to 58.0 wt.%.

4. Temperature-resistant aluminosilicate glass fibre according to any of claims 1 to 3, **characterised in that** it comprises MgO in a proportion of from 0.5 to 0.8 wt. % and Fe₂O₃ in a maximum proportion of 0.3 wt. %.

5. Temperature-resistant aluminosilicate glass fibre according to any of claims 1 to 4, **characterised in that** it is present in the form of filaments or in the form of staple fibres.

6. Method for producing a temperature-resistant aluminosilicate glass fibre according to any of claims 1 to 5, comprising the following steps:
a. providing a glass melt which has the following proportions of oxides:
| | |
|---|---|
| 52-60 wt.% | SiO₂ |
| 14-16 wt.% | Al₂O₃ |
| <0.4 wt. % | Fe₂O₃ |
| 0.03-0.3 wt.% | Na₂O |
| 0.3-0.7 wt.% | K₂O |
| 20-22 wt.% | CaO |
| 0.4-0.8 wt.% | MgO |
| 1-5 wt.% | TiO₂ |
| 0.5-3 wt.% | BaO |
| 0-2 wt.% | SrO |
| 0-3 wt.% | ZrO₂ |
| 0-1 wt.% | CuO, |
wherein the overall proportion of the alkali metal oxides Na₂O and K₂O is in total no more than 1.0 wt.%,
wherein the overall proportion of the oxides SrO, CuO, ZrO₂ is in a range of from 0.1 to 4.0 wt. %,
b. converting the melt into filaments or staple fibres,
c. cooling the obtained filaments or staple fibres,
d. winding the filaments or producing sheet materials,
e. drying the obtained filaments or staple fibres or sheet materials.

7. Method according to claim 6, **characterised in that**, when providing the glass melt, a proportion of the overall proportion of BaO is added as barium sulfate in a proportion of 0.4 wt. %.

8. Method according to either claim 6 or claim 7, **characterised in that** the filaments and staple fibres obtained from the glass melt are treated with a size.

9. Method according to any of claims 6 to 8, **characterised in that** the size contains inorganic substances.

10. Use of a temperature-resistant aluminosilicate glass fibre obtained according to any of claims 1 to 5 or according to any of claims 6 to 9 for producing tension-resistant glass fibres, yarns, nonwoven fabrics, woven fabrics or sheet materials for catalysts, filters or other fibre products.

11. Use according to claim 10, **characterised in that** the woven fabrics consist of temperature-resistant aluminosilicate glass fibres that are thermally desized and provided with a finish.

## Revendications

1. Fibre de verre en aluminosilicate résistant à la température, ayant la composition suivante :
52 à 60 % en poids de SiO₂
14 à 16 % en poids d'Al₂O₃
< 0,4 % en poids de Fe₂O₃
0,03 à 0,3 % en poids de Na₂O
0,3 à 0,7 % en poids de K₂O
20 à 22 % en poids à CaO
0,4 à 0,8 % en poids de MgO
1 à 5 % en poids de TiO₂
0,5 à 3 % en poids de BaO
0 à 2 % en poids de SrO
0 à 3 % en poids de ZrO₂
0 à 1 % en poids de CuO,
la proportion totale d'oxydes de métaux alcalins Na₂O et K₂O s'élevant au maximum à 1,0 % en poids,
la proportion totale d'oxydes SrO, CuO, ZrO₂ étant dans la gamme allant de 0,1 à 4,0 % en poids, et
la fibre de verre en aluminosilicate résistant à la température ayant une température de transformation > 760°C et une température de formation de fibres < 1260 °C,
la résistance à la rupture résiduelle de la fibre de verre en aluminosilicate résistant à la température, dont le diamètre est dans la gamme de 9 à 15 µm, en fonction d'une charge de température de 760 °C étant dans la gamme comprise entre 10 % et 15 % par rapport à la résistance à la rupture initiale à la température ambiante.

2. Fibre de verre en aluminosilicate résistant à la température selon la revendication 1, **caractérisée en ce qu'**elle contient du Na₂O dans une proportion de 0,25 % en poids maximum.

3. Fibre de verre en aluminosilicate résistant à la température selon la revendication 1 ou la revendication 2, **caractérisée en ce qu'**elle contient du SiO₂ dans une proportion dans la gamme de 54,0 à 58,0 % en poids.

4. Fibre de verre en aluminosilicate résistant à la température selon l'une des revendications 1 à 3, **caractérisée en ce qu'**elle contient du MgO dans une proportion de 0,5 à 0,8 % en poids et du Fe₂O₃ dans une proportion de 0,3 % en poids maximum.

5. Fibre de verre en aluminosilicate résistant à la température selon l'une des revendications 1 à 4, **caractérisée en ce qu'**elle est présente sous la forme de filaments ou sous la forme de fibres courtes.

6. Procédé de production d'une fibre de verre en aluminosilicate résistant à la température selon l'une des revendications 1 à 5, comprenant les étapes suivantes :
a. fournir un verre fondu qui a les proportions d'oxydes suivantes :
52 à 60 % en poids de SiO₂
14 à 16 % en poids d'Al₂O₃
< 0,4 % en poids de Fe₂O₃
0,03 à 0,3 % en poids de Na₂O
0,3 à 0,7 % en poids de K₂O
20 à 22 % en poids à CaO
0,4 à 0,8 % en poids de MgO
1 à 5 % en poids de TiO₂
0,5 à 3 % en poids de BaO
0 à 2 % en poids de SrO
0 à 3 % en poids de ZrO₂
0 à 1 % en poids de CuO,
la proportion totale d'oxydes de métaux alcalins Na₂O et K₂O s'élevant au maximum à 1,0 % en poids,
la proportion totale d'oxydes SrO, CuO, ZrO₂ étant dans la gamme allant de 0,1 à 4,0 % en poids,
b. transformer la matière fondue en filaments ou en fibres discontinues,
c. refroidir les filaments ou fibres discontinues obtenues,
d. bobiner les filaments ou produire des structures planes,
e. sécher les filaments ou fibres discontinues ou structures planes obtenus.

7. Procédé selon la revendication 6, **caractérisé en ce que**, lors de la fourniture du verre fondu, une partie de la proportion totale de BaO est ajoutée en tant que sulfate de baryum dans une proportion de 0,4 % en poids.

8. Procédé selon la revendication 6 ou 7, **caractérisé en ce que** les filaments et les fibres discontinues obtenus à partir du verre fondu sont traités avec un apprêt.

9. Procédé selon l'une quelconque des revendications 6 à 8, **caractérisé en ce que** l'apprêt contient des substances minérales.

10. Utilisation d'une fibre de verre en aluminosilicate résistant à la température obtenue selon l'une des revendications 1 à 5 ou selon l'une des revendications 6 à 9, dans la fabrication de fibres de verre, de fils, de matériau non tissé, de tissus ou de structures planes résistant à la traction pour catalyseurs, filtres ou autres produits fibreux.

11. Utilisation selon la revendication 10, **caractérisée en ce que** les tissus sont constitués de fibres de verre en aluminosilicate résistant à la température qui sont dépourvues d'apprêt par des moyens thermiques et qui sont pourvue d'un produit de finition.
